# EUROPÄISCHE PATENTSCHRIFT

(11) **EP 1 983 244 B1**
(45) Veröffentlichungstag und Bekanntmachung des Hinweises auf die Patenterteilung: **03.10.2012**
(21) Anmeldenummer: 07106289.7
(22) Anmeldetag: 17.04.2007
(51) Int. Cl.: F16L 25/00, F16L 33/26, F16L 19/02, F16L 33/22, F16L 19/04

(54) **Verbindungsanordnung für Metallwellrohre**
Coupling arrangement for corrugated metal tube
Arrangement de raccordement pour tuyau métallique ondulé

(43) Veröffentlichungstag der Anmeldung: 22.10.2008
(73) Patentinhaber: SERTO Holding AG, 8355 Aadorf (CH)
(72) Erfinder: Westermann, Pirmin, 8303, Bassersdorf (CH); Bachmann, Christoph, 9532, Rickenbach (CH)
(74) Vertreter: De Colle, Piergiacomo

(56) Entgegenhaltungen:
- DE-A1-102005 060 576
- GB-A- 1 371 609
- US-A1- 2002 185 867

## Beschreibung

Die Erfindung bezieht sich auf eine Verbindungsanordnung für Metallwellrohre umfassend ein rohrförmiges Anschlussteil zum Anschliessen eines metallischen gewellten Rohres an weitere Rohrleitungselementen, einen Klemmring zum Einklemmen des Wellrohres, einen Dichtring und eine Überwurfmutter zum Verpressen des Klemmringes, wobei das Anschlussteil und die Überwurfmutter zu einander passende Gewindebereiche aufweisen.

Im Rohrleitungsbau, insbesondere im Bereich Solaranlagenbau, werden Wellrohre aus Metall als Übertragungsleitungen für das Wärmeträgermedium eingesetzt. Die gewellten Rohre sind sehr gut geeignet, Änderungen im Leitungsverlauf, die durch Temperaturschwankungen entstehen, zu kompensieren. Weiterhin werden metallische Wellrohre auch bei elektrischen Leitungen als Abschirmung gegen elektromagnetische Störungen verwendet. Die Metallwellrohre können schraubenlinien- d.h. spiralförmig oder parallel ringförmig gewellt sein. Wellrohre aus Kunststoff werden vor allem als Kanal zur Verlegung von elektrischen Leitern, z.B. im Fahrzeugbau verwendet.

Aus der DE 10 2005 060 576 A1 ist eine Rohrverschraubung für zylindrisch parallel gewellte Rohre bekannt. Die Verschraubung besteht aus einem rohrförmigen Anschlussteil mit einer Auflage für einen Dichtring mit einem konisch abgeschrägten Profil auf der nach innen gerichteten Seite, einem Ring, der in dem Tal hinter der ersten Welle des Wellrohres eingelegt werden muss, und einer Überwurfmutter zum Verschrauben mit dem rohrförmigen Anschlussteil. Der Ring und das rohrförmige Anschlussteil sind so dimensioniert, dass beim Verschrauben der Ring auf die Stirnseite des Anschlussteiles aufliegt, und dass die erste Welle des Wellrohres in der Verschraubung festgehalten wird. Damit der Ring in dem ersten Wellental eingelegt werden kann, ist dieser zweiteilig oder aus zwei nahezu halben Ringteilen, die über einen schmalen Steg miteinander verbunden sind, ausgebildet. Weil das Wellrohr bei der Verschraubung nicht oder nur unwesentlich gestaucht wird, muss das Rohrende möglichst genau in einem Wellental liegen.

Eine weitere gattungsgemäße Verbindungsanordnung ist aus der GB 1,371,609 bekannt.

Ausgehend von diesem Stand der Technik ist es Aufgabe der Erfindung, eine Verbindungsanordnung für Metallrohre anzugeben, die aus möglichst wenigen und möglichst einfach herzustellenden Einzelteile aufgebaut ist, die eine gute Dichtwirkung gewährleistet und die lösbar und wieder verwendbar aufgebaut ist.

Diese Aufgabe wird gelöst durch eine Verbindungsanordnung für Metallwellrohre umfassend ein rohrförmiges Anschlussteil zum Anschliessen eines metallischen gewellten Rohres an weitere Rohrleitungselementen, einen Klemmring zum Einklemmen des Wellrohres, einen Dichtring und eine Überwurfmutter zum Verpressen des Klemmringes, wobei das Anschlussteil und die Überwurfmutter zu einander passende Gewindebereiche aufweisen, wobei der Klemmring eine Innenhülse und eine beabstandet dazu angeordnete Aussenhülse aufweist, wobei zwischen der Innenhülse und der Aussenhülse eine ringförmige Vertiefung zur Aufnahme eines Endes des Wellrohres ausgebildet ist.

Bevorzugte Weiterbildungen der Erfindung ergeben sich aus den abhängigen Ansprüchen.

Es ist von Vorteil, dass die einmal verschraubte und montierte Verbindungsanordnung möglichst einfach und ohne Verformung des flexiblen Rohrleitungssystems wieder geöffnet und demontiert werden kann. Nach einer Inspektion oder einer Reinigung des Rohrleitungssystems bleibt die Verschraubung mit dem Wellrohr verbunden und kann mehrmals wieder verwendet werden. Dies wird dadurch erreicht, dass der Klemmring eine Stirnwand aufweist, die die gleiche Auflagefläche und Oberflächenbeschaffenheit wie die dazu passende Stirnfläche des Anschlussteiles aufweist.

Es ist auch von Vorteil, dass auf der Innenseite der Rohrleitung keine scharfen Kanten des Wellrohres vorstehen. Die Strömung durch die Verbindungsanordnung kann gleichmässig, mit möglichst wenig Druckverlust und ohne so genannte Toträume ausgelegt werden. Dies wird dadurch erreicht, dass der Klemmring mit der Innenhülse und der Aussenhülse auf ihrem gesamten Umfang geschlossen, das heisst ohne Segmentierung und ohne Schlitze ausgebildet ist.

Es ist weiter auch von Vorteil, dass das Wellrohr bei der Montage nicht unnötig verquetscht werden kann. Dies wird dadurch erreicht, dass die freie Länge der Innenhülse des Klemmringes mindestens zwei Wellenlängen des Wellrohres beträgt. Dies wird auch dadurch erreicht, dass die Aussenhülse des Klemmringes unter Krafteinwirkung leichter verformbar ausgebildet ist als die Überwurfmutter. Die Innenhülse sorgt somit für eine ausreichende Führung und Unterstützung des Wellrohres. Der Klemmring weist eine radial nach aussen gerichtete ringförmige Schulter auf, die über den Aussendurchmesser der Aussenhülse des Klemmringes vorsteht und die einen konischen Bereich aufweist, der als Anschlag für einen identisch konisch ausgebildeten Kragenbereich der Überwurfmutter ausgebildet ist.

Es ist auch von Vorteil, dass die Verbindungsanordnung ohne spezielles Werkzeug und ohne Vorbereitungsarbeiten aus möglichst wenigen und handelsüblichen Teilen aufgebaut werden kann. Dies wird dadurch erreicht, dass das Anschlussteil als ein handelsübliches Nippelteil mit einem Sechskantbereich und zwei Aussengewindebereichen ausgebildet ist. Dies wird auch dadurch erreicht, dass der Dichtring ein handelsüblicher Flachdichtring ist. Das Ende des Wellrohres braucht keine spezielle Vorbereitung wie beispielsweise ein Entwellen, Bördeln oder Flanschen. Auch die Überwurfmutter weist keine aufwändigen Konstruktionsmerkmale auf.

Ein Ausführungsbeispiel der Erfindung wird anhand der Figuren beschrieben. Es zeigen:
Figur 1 eine Sicht auf eine erfindungsgemässe Rohrverbindungsanordnung für ein Wellrohr, wobei in der oberen Bildhälfte die Teile entlang der Mittellinie geschnitten und in der unteren Bildhälfte die Teile in der Aufsicht dargestellt sind.
Figur 2 eine ebensolche Schnitt-/Sichtdarstellung durch die Verbindungsanordnung von Figur 1 in einer ersten Phase des Zusammenbaus mit dem Wellrohr und
Figur 3 eine ebensolche Schnitt-/Sichtdarstellung durch die Verbindungsanordnung von Figur 1 am Ende des Zusammenbaus mit dem Wellrohr.

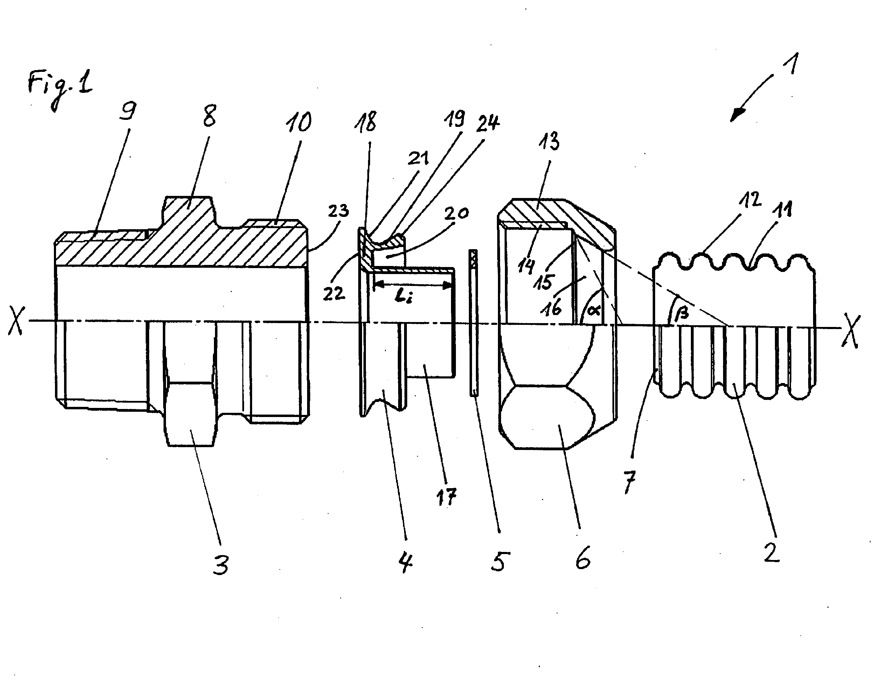

In Figur 1 ist eine Verbindungsanordnung 1 für ein Wellrohr 2 dargestellt. Von links nach rechts sind ein Anschlussteil 3, ein Klemmring 4 ein Dichtring 5, eine Überwurfmutter 6 und ein Ende 7 des Wellrohres 2 dargestellt. Das Anschlussteil 3 ist als ein handelsübliches Nippelteil 3 mit einem Sechskantmutterbereich 8 und zwei Aussengewindebereichen 9,10 dargestellt. Das Anschlussteil 3 dient mit dem ersten Aussengewindebereich 9 zum Anschliessen des Wellrohres 2 an weitere Rohrleitungselemente, die hier nicht dargestellt sind. Hier kann anstelle des Aussengewindes 9 auch ein Innengewindebereich vorgesehen werden, wenn die weiteren Rohrleitungselemente dementsprechend ausgebildet sind. Das Anschlussteil 3 kann auch als ein anderes Rohrverbindungselement, beispielsweise als eine T- oder Y-förmige Verzweigung oder als ein Übergangsstück zu einem grösseren oder kleineren Rohrdurchmesser oder zu einem weiteren Wellrohr ausgebildet werden.

Das Wellrohr 2 ist als ein metallisches, zylindrisch gewelltes Rohr 2 mit in der Richtung der Rohrachse X parallel zu einander angeordneten Wellentälern 11 und Wellenkämmen 12 dargestellt. Das Ende 7 des Wellrohres 2 wird senkrecht zur Rohrachse X abgeschnitten und braucht nicht weiter vorbereitet zu werden. Um eine gute, d. h. gut dichtende Funktion der Verbindung gewährleisten zu können, soll das Wellrohr 2 nicht auf einem Wellenkamm 12 abgeschnitten werden.

Der Dichtring 5 ist ein handelsüblicher, flacher Dichtring 5 aus einem weichen Werkstoff, beispielsweise ein Gummi-, Elastomer- oder Silikonring 5. Der Dichtring 5 erhöht die Dichtwirkung der Verbindungsanordnung 1 insbesondere dann, wenn das Fördermedium gasförmig ist. Bei flüssigen Fördermedien kann der Dichtring 5 auch ohne Beeinträchtigung der Dichtwirkung der Verbindungsanordnung 1 weg gelassen werden.

Die Überwurfmutter 6 ist ebenfalls einfach herzustellen. Die Überwurfmutter 6 weist einen Gewindebereich 13 mit einem Innengewinde 14 auf, das zum Aussengewinde 10 des zweiten Gewindebereiches 10 des Anschlussteiles 3 passt. Anschliessend an den Gewindebereich 13 der Überwurfmutter 6 sind zwei konische Kragenbereiche 15,16 ersichtlich.

Der erste konisch ausgebildete, d.h. unter einem ersten Winkel α zur Rohrleitungsachse X verlaufende Kragenbereich 15 dient am Ende des Zusammenbaus als Anschlag für eine Schulter 21 des Klemmringes 4 und verhindert ein zu kräftiges Anziehen der Verschraubung des Innengewindes 14 mit dem Aussengewinde 10.

Der zweite konisch ausgebildete Bereich 16 ist grösser als der erste Bereich 15 und ist unter einem zweiten Winkel **β** zur Rohrleitungsachse X verlaufend angeordnet, wobei der zweite Winkel **β** kleiner ist als der erste Winkel α. Der zweite konische Bereich 16 der Überwurfmutter 6 dient beim Zusammenschrauben der Verbindungsanordnung 1 zur Verformung der Aussenhülse 19 des Klemmringes 4.

Der Klemmring 4 besteht aus einer Innenhülse 17, einer Stirnwand 18 und einer Aussenhülse 19. Sowohl die Innenhülse 17 als auch die Aussenhülse 19, wie auch die Stirnwand 18 sind geschlossen, d.h. durchgehend, ohne Segmentierung und ohne Schlitze ausgebildet. Da das Schlitzen einen zusätzlichen Bearbeitungsschritt in der Herstellung benötigen würde, kann der Klemmring 4 als einfaches rotationssymmetrisches Drehteil hergestellt werden. Die Innenhülse 17 weist einen Aussendurchmesser auf, der übereinstimmt mit dem kleinsten Innendurchmesser des Wellrohres 2.

Die Innenhülse 17 dient zur Führung und Unterstützung des Wellrohres 2. Die freie Länge Lᵢ der Innenhülse 17 ist mindestens so gross wie zwei Wellenlängen des Wellrohres 2. Zwischen der Innenhülse 17 und der Aussenhülse 19 wird eine mit der Stirnwand 18 abgeschlossene, ringförmige Aufnahme oder Vertiefung 20 gebildet. In diese Vertiefung 20 wird am Boden, anliegend an die Stirnwand 18, der Dichtring 5 aufgenommen. Im zusammengebauten Zustand der Verbindungsanordnung 1 liegt das Ende 7 des Wellrohres 2 unmittelbar auf dem Dichtring 5.

Die Stirnwand 18 des Klemmringes 4 erstreckt sich radial nach aussen bis zu einer Schulter 21 mit einem Aussendurchmesser, der grösser ist als der Aussendurchmesser der Aussenhülse 19. Der Aussendurchmesser der Schulter 21 wird jedoch so gewählt, dass der Klemmring 4 leicht innerhalb des Innengewindes 14 der Überwurfmutter 6 eingeführt werden kann.

Die ringförmige Stirnwand 18 des Klemmringes 4 weist auf der Aussenseite, d.h. auf der dem Dichtring 5 gegenüberliegenden Seite eine ringförmige Auflagefläche 22 auf. Diese ringförmige Auflagefläche 22 ist gleich gross wie die dazu passende Auflagefläche 23 des Anschlussteiles 3. Auch die Oberflächenbeschaffenheit der ersten Auflagefläche 22 ist identisch mit der Oberflächenbeschaffenheit der zweiten Auflagefläche 23 des Anschlussteiles 3.

Die Auflageflächen 22,23 sind senkrecht zur Rohrleitungsachse X angeordnet. Hiermit wird erreicht, dass das Wellrohr 2 mit dem Klemmring 4, dem Dichtring 5 und der Überwurfmutter 6 nach dem Zusammenbau einfach und ohne Kraftaufwand demontiert werden kann. Bei der Demontage muss das Wellrohr 2 nicht gestaucht werden um es aus der Verbindungsanordnung 1 zu lösen, sondern es kann seitlich, d.h. radial weg geschoben werden. Obwohl Wellrohre in axialer Richtung relativ flexibel sind, ist jedoch der Kraftaufwand für die Stauchung beim Aus- und Wiedereinbau erheblich.

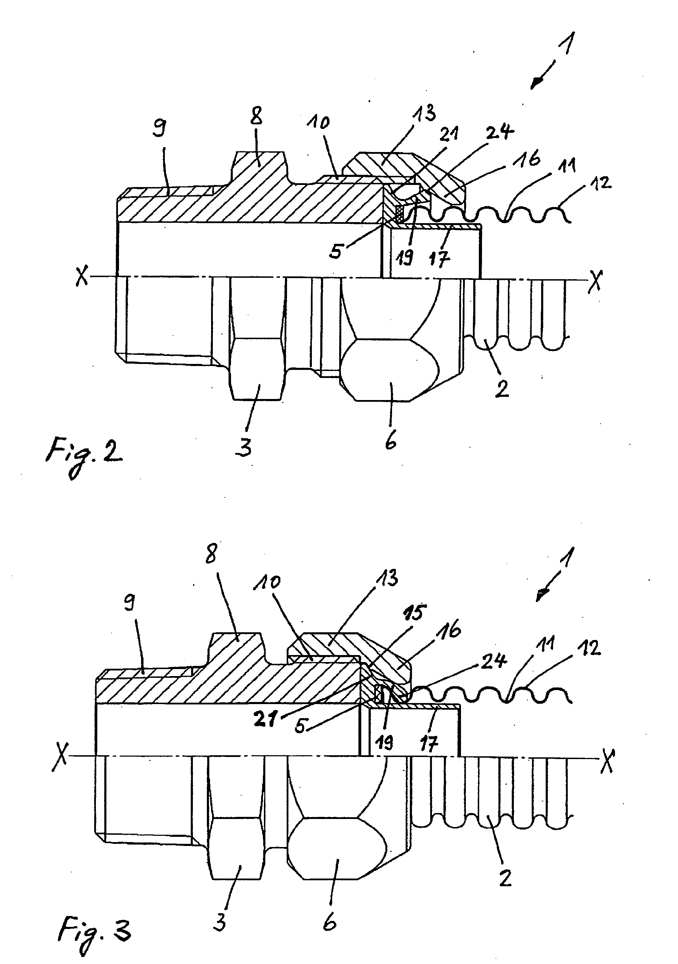

In Figur 2 und Figur 3 ist die Verbindungsanordnung 1 in zwei unterschiedlichen Zuständen gezeigt. In Figur 2 ist die Verbindungsanordnung 1 lose, ohne Verformung zusammengeschraubt dargestellt. Die Aussenhülse 19 liegt in dieser ersten Phase des Zusammenbaus mit einer konischen Fläche 24 lose auf dem zweiten konischen Bereich 16 des Klemmringes 6 auf.

Die konische Fläche 24 und der zweite konische Bereich 16 sind beide unter einem identischen Winkel **β** zur Rohrachse X verlaufend angeordnet. Durch die Formgebung, durch die Wahl der Werkstoffe und/oder als Folge einer thermischen Behandlung ist die Aussenhülse 19 des Klemmringes 4 unter Krafteinwirkung leichter verformbar ausgebildet als die Überwurfmutter 6. Hiermit wird erreicht, dass beim weiteren Zusammenschrauben der Überwurfmutter 6 als Folge der Krafteinwirkung die Aussenhülse 19 radial nach innen gedrückt wird. Die Überwurfmutter 6 wird soweit zusammengeschraubt, bis der erste konische Bereich 15 auf der Schulter 21 der Stirnwand 18 des Klemmringes 4 aufliegt.

Am Ende des Verbindungsvorgangs befindet sich das freie Ende 24 der Aussenhülse 19 in dem ersten vollständigen Wellental 11 des Wellrohres 2. Das Wellrohr 2 ist jetzt fest verbunden mit dem Klemmring 4, wird zwischen Innenhülse 17 und Aussenhülse 19 festgehalten und bleibt auch dann mit dem Klemmring 4 und dem Dichtring 5 verbunden, wenn die Überwurfmutter 6 losgeschraubt wird. Dieser Zustand ist in Figur 3 dargestellt. Eine nachträgliche Demontage der Verbindung zwischen Anschlussteil 3 und Wellrohr 2 ist ohne Kraftaufwand möglich. Nach dem Losschrauben der Überwurfmutter 6 kann die Verbindung durch seitliches Wegschwenken geöffnet werden.

Die Verbindungsanordnung 1 mit dem metallischen Wellrohr 2 wird vor allem bei Rohrverbindungen eingesetzt, bei denen grosse Temperaturschwankungen auftreten. Ein Anwendungsbeispiel ist das Rohrleitungssystem einer Solaranlage. Die hier beschriebene Verbindungsanordnung 1 ist, mit Ausnahme des Dichtringes 5, aus Metall, beispielsweise aus einer Kupferlegierung hergestellt, kann aber auch aus einem nichtmetallischen Werkstoff, beispielsweise Kunststoffmaterial hergestellt werden.

## Patentansprüche

1. Verbindungsanordnung (1) für Metallwellrohre umfassend ein rohrförmiges Anschlussteil (3) zum Anschliessen eines metallischen gewellten Rohres (2) an weitere Rohrleitungselementen, einen Klemmring (4) zum Einklemmen des Wellrohres (2), einen Dichtring (5) und eine Überwurfmutter (6) zum Verpressen des Klemmringes (4), wobei das Anschlussteil (3) und die Überwurfmutter (6) zu einander passende Gewindebereiche (10,13,14) aufweisen, **dadurch gekennzeichnet, dass** der Klemmring (4) eine Innenhülse (17) und eine beabstandet dazu angeordnete Aussenhülse (19) aufweist, wobei zwischen der Innenhülse (17) und der Aussenhülse (19) eine ringförmige Vertiefung (20) zur Aufnahme eines Endes (7) des Wellrohres (2) ausgebildet ist.

2. Verbindungsanordnung (1) für Metallwellrohre nach dem Anspruch 1, **dadurch gekennzeichnet, dass** die Innenhülse (17) und die Aussenhülse (19) des Klemmringes (4) auf ihren gesamten Umfang geschlossen, das heisst ohne Schlitze und ohne Segmente, ausgebildet sind.

3. Verbindungsanordnung (1) für Metallwellrohre nach mindestens einem der Ansprüche 1 oder 2, **dadurch gekennzeichnet, dass** die Innenhülse (17) und die Aussenhülse (19) an einem Ende des Klemmringes (4) mittels einer senkrecht zur Rohrachse (**X**) ausgebildeten Stirnwand (18) miteinander verbunden angeordnet sind, derart, dass eine einseitig offene ringförmige Vertiefung (20) für das Ende (7) des Wellrohres (2) gebildet wird.

4. Verbindungsanordnung (1) für Metallwellrohre nach mindestens einem der Ansprüche 1 bis 3, **dadurch gekennzeichnet, dass** der Dichtring (5) am Grund der ringförmigen Vertiefung (20) anliegend an die Stirnwand (18) des Klemmringes (4) angeordnet ist.

5. Verbindungsanordnung (1) für Metallwellrohre nach mindestens einem der Ansprüche 1 bis 4, **dadurch gekennzeichnet, dass** die ringförmige Stirnwand (18) des Klemmringes (4) mit einer Auflagefläche (22) aufliegend auf einer weiteren Stirnwand (23) des Anschlussteiles (3) ausgebildet ist, wobei die Auflagefläche (22) gleich gross und mit gleicher Oberflächenbeschaffenheit wie die weitere Stirnwand (23) des Anschlussteiles (3) ausgebildet ist.

6. Verbindungsanordnung (1) für Metallwellrohre nach mindestens einem der Ansprüche 1 bis 5, **dadurch gekennzeichnet, dass** die Stirnwand (18) des Klemmringes (4) eine radial nach aussen über den Aussendurchmesser der Aussenhülse (19) vorstehende Schulter (21) aufweist.

7. Verbindungsanordnung (1) für Metallwellrohre nach mindestens einem der Ansprüche 1 bis 6, **dadurch gekennzeichnet, dass** die Überwurfmutter (6) einen Gewindebereich (13,14) zum Verschrauben mit dem Anschlussteil (3) und einen konisch ausgebildeten Kragen (15,16) aufweist.

8. Verbindungsanordnung (1) für Metallwellrohre nach mindestens einem der Ansprüche 1 bis 7, **dadurch gekennzeichnet, dass** der Kragen (15,16) unmittelbar anschliessend an dem Gewindebereich (13,14) einen ersten konisch verlaufend ausgebildeten Kragenbereich (15) aufweist, der als Anschlag für die Schulter (21) der Stirnwand (18) des Klemmringes (4) ausgebildet ist.

9. Verbindungsanordnung (1) für Metallwellrohre nach mindestens einem der Ansprüche 1 bis 8, **dadurch gekennzeichnet, dass** sowohl die Schulter (21) der Stirnwand (18) des Klemmringes (4) als auch der erste konisch verlaufend ausgebildete Kragenbereich (15) unter einem identischen Winkel (α) zur Rohrachse (**X**) ausgebildet angeordnet sind.

10. Verbindungsanordnung (1) für Metallwellrohre nach mindestens einem der Ansprüche 1 bis 9, **dadurch gekennzeichnet, dass** der Kragen (15,16) der Überwurfmutter (6) einen zweiten konisch verlaufend ausgebildeten Kragenbereich (16) aufweiset, der zur Verformung der Aussenhülse (19) des Klemmringes (4) ausgebildet ist.

11. Verbindungsanordnung (1) für Metallwellrohre nach mindestens einem der Ansprüche 1 bis 10, **dadurch gekennzeichnet, dass** sowohl der zweite konisch verlaufend ausgebildeten Kragenbereich (16) der Überwurfmutter (6) als auch einen konischen Bereich (24) der Aussenhülse (19) des Klemmringes (4) unter einem identischen Winkel (β) zur Rohrachse (**X**) ausgebildet angeordnet sind.

12. Verbindungsanordnung (1) für Metallwellrohre nach mindestens einem der Ansprüche 1 bis 11, **dadurch gekennzeichnet, dass** die Aussenhülse (19) des Klemmringes (4) unter Krafteinwirkung leichter verformbar als die Überwurfmutter (6) ausgebildet ist. '

13. Verbindungsanordnung (1) für Metallwellrohre nach mindestens einem der Ansprüche 1 bis 12, **dadurch gekennzeichnet, dass** die freie Länge (Lᵢ) der Innenhülse (17) mindestens zwei Wellenlängen des Wellrohres (2) beträgt.

14. Verbindungsanordnung (1) für Metallwellrohre nach mindestens einem der Ansprüche 1 bis 13, **dadurch gekennzeichnet, dass** das Anschlussteil (3) als ein Nippelteil (3) mit einem Sechskantbereich (8) und zwei Aussengewindebereichen (9,10) ausgebildet ist.

15. Verbindungsanordnung (1) für Metallwellrohre nach mindestens einem der Ansprüche 1 bis 14, **dadurch gekennzeichnet, dass** das Wellrohr (2) parallel ringförmig gewellt ausgebildet ist.

## Claims

1. Connecting arrangement (1) for corrugated metal pipes, comprising a tubular connection part (3) for connecting a metallic corrugated pipe (2) to further pipeline elements, a clamping ring (4) for clamping the corrugated pipe (2), a sealing ring (5) and a union nut (6) for pressing the clamping ring (4), wherein the connection part (3) and the union nut (6) have compatible threaded regions (10, 13, 14), **characterized in that** the clamping ring (4) has an internal sleeve (17) and an external sleeve (19) arranged in a manner spaced apart therefrom, wherein an annular depression (20) for receiving one end (7) of the corrugated pipe (2) is formed between the internal sleeve (17) and the external sleeve (19).

2. Connecting arrangement (1) for corrugated metal pipes according to Claim 1, **characterized in that** the internal sleeve (17) and the external sleeve (19) of the clamping ring (4) are formed in a closed manner, i.e. without slots and without segments, around their entire circumference.

3. Connecting arrangement (1) for corrugated metal pipes according to at least one of Claims 1 and 2, **characterized in that** the internal sleeve (17) and the external sleeve (19) are arranged at one end of the clamping ring (4) in a manner connected together by means of an end wall (18) formed perpendicularly to the pipe axis (X), such that an annular depression (20) that is open on one side is formed for the end (7) of the corrugated pipe (2).

4. Connecting arrangement (1) for corrugated metal pipes according to at least one of Claims 1 to 3, **characterized in that** the sealing ring (5) is arranged at the bottom of the annular depression (20) in abutment against the end wall (18) of the clamping ring (4).

5. Connecting arrangement (1) for corrugated metal pipes according to at least one of Claims 1 to 4, **characterized in that** the annular end wall (18) of the clamping ring (4) is formed with a bearing surface (22) in abutment against a further end wall (23) of the connection part (3), wherein the bearing surface (22) is formed to be the same size and to have the same surface condition as the further end wall (23) of the connection part (3).

6. Connecting arrangement (1) for corrugated metal pipes according to at least one of Claims 1 to 5, **characterized in that** the end wall (18) of the clamping ring (4) has a shoulder (21) that protrudes radially towards the outside beyond the outside diameter of the external sleeve (19).

7. Connecting arrangement (1) for corrugated metal pipes according to at least one of Claims 1 to 6, **characterized in that** the union nut (6) has a threaded region (13, 14) for screwing to the connection part (3), and a conically formed collar (15, 16).

8. Connecting arrangement (1) for corrugated metal pipes according to at least one of Claims 1 to 7, **characterized in that** the collar (15, 16) has, immediately adjoining the threaded region (13, 14), a first conically extending collar region (15) which is formed as a stop for the shoulder (21) on the end wall (18) of the clamping ring (4).

9. Connecting arrangement (1) for corrugated metal pipes according to at least one of Claims 1 to 8, **characterized in that** both the shoulder (21) on the end wall (18) of the clamping ring (4) and the first conically extending collar region (15) are arranged at an identical angle (α) to the pipe axis (X).

10. Connecting arrangement (1) for corrugated metal pipes according to at least one of Claims 1 to 9, **characterized in that** the collar (15, 16) of the union nut (6) has a second conically extending collar region (16) which is formed so as to deform the external sleeve (19) of the clamping ring (4).

11. Connecting arrangement (1) for corrugated metal pipes according to at least one of Claims 1 to 10, **characterized in that** both the second conically extending collar region (16) of the union nut (6) and a conical region (24) of the external sleeve (19) of the clamping ring (4) are arranged at an identical angle (β) to the pipe axis (X).

12. Connecting arrangement (1) for corrugated metal pipes according to at least one of Claims 1 to 11, **characterized in that** the external sleeve (19) of the clamping ring (4) is formed to be more easily deformable than the union nut (6) under the application of force.

13. Connecting arrangement (1) for corrugated metal pipes according to at least one of Claims 1 to 12, **characterized in that** the free length (Lᵢ) of the internal sleeve (17) is at least two corrugation lengths of the corrugated pipe (2).

14. Connecting arrangement (1) for corrugated metal pipes according to at least one of Claims 1 to 13, **characterized in that** the connection part (3) is formed as a nipple part (3) having a hexagonal region (8) and two external thread regions (9, 10).

15. Connecting arrangement (1) for corrugated metal pipes according to at least one of Claims 1 to 14, **characterized in that** the corrugated pipe (2) is formed with parallel annular corrugations.

## Revendications

1. Arrangement de raccordement (1) pour tuyau métallique ondulé, comprenant une pièce de raccordement tubulaire (3) pour le raccordement d'un tuyau métallique ondulé (2) à d'autres éléments de conduite tubulaire, une bague de serrage (4) pour le serrage du tuyau ondulé (2), un joint torique (5) et un écrou à chapeau (6) pour le pressage de la bague de serrage (4), dans lequel la pièce de raccordement (3) et l'écrou à chapeau (6) présentent des portées filetées (10, 13, 14) se correspondant mutuellement, **caractérisé en ce que** la bague de serrage (4) comporte une douille intérieure (17) et une douille extérieure (19) disposée à distance de celle-ci, dans lequel une cavité annulaire (20) destinée à recevoir une extrémité (7) du tuyau ondulé (2) est formée entre la douille intérieure (17) et la douille extérieure (19).

2. Arrangement de raccordement (1) pour tuyau métallique ondulé selon la revendication 1, **caractérisé en ce que** la douille intérieure (17) et la douille extérieure (19) de la bague de serrage (4) sont fermées sur tout leur pourtour, c'est-à-dire sans fentes et sans segments.

3. Arrangement de raccordement (1) pour tuyau métallique ondulé selon au moins une des revendications 1 ou 2, **caractérisé en ce que** la douille intérieure (17) et la douille extérieure (19) sont assemblées l'une à l'autre à une extrémité de la bague de serrage (4) au moyen d'une paroi frontale (18) configurée perpendiculairement à l'axe du tube (X), de telle manière qu'il se soit formé une cavité annulaire ouverte d'un côté (20) pour l'extrémité (7) du tuyau ondulé (2).

4. Arrangement de raccordement (1) pour tuyau métallique ondulé selon au moins une des revendications 1 à 3, **caractérisé en ce que** le joint torique (5) est disposé au fond de la cavité annulaire (20) en s'appliquant sur la paroi frontale (18) de la bague de serrage (4).

5. Arrangement de raccordement (1) pour tuyau métallique ondulé selon au moins une des revendications 1 à 4, **caractérisé en ce que** la paroi frontale annulaire (18) de la bague de serrage (4) est configurée avec une face d'appui (22) s'appliquant sur une autre paroi frontale (23) de la pièce de raccordement (3), dans lequel la face d'appui (22) a la même grandeur et le même état de surface que l'autre paroi frontale (23) de la pièce de raccordement (3).

6. Arrangement de raccordement (1) pour tuyau métallique ondulé selon au moins une des revendications 1 à 5, **caractérisé en ce que** la paroi frontale (18) de la bague de serrage (4) présente un épaulement (21) saillant radialement vers l'extérieur au-delà du diamètre extérieur de la douille extérieure (19).

7. Arrangement de raccordement (1) pour tuyau métallique ondulé selon au moins une des revendications 1 à 6, **caractérisé en ce que** l'écrou à chapeau (6) présente une portée filetée (13, 14) destinée à être vissée sur la pièce de raccordement (3) et un collet de forme conique (15, 16).

8. Arrangement de raccordement (1) pour tuyau métallique ondulé selon au moins une des revendications 1 à 7, **caractérisé en ce que** le collet (15, 16) présente une première zone de collet (15) s'étendant sous forme conique se raccordant directement à la portée filetée (13, 14), et qui est réalisée en forme de butée pour l'épaulement (21) de la paroi frontale (18) de la bague de serrage (4).

9. Arrangement de raccordement (1) pour tuyau métallique ondulé selon au moins une des revendications 1 à 8, **caractérisé en ce qu'**aussi bien l'épaulement (21) de la paroi frontale (18) de la bague de serrage (4) que la première zone de collet (15) s'étendant sous forme conique sont disposées en formant un angle identique (α) avec l'axe du tube (X).

10. Arrangement de raccordement (1) pour tuyau métallique ondulé selon au moins une des revendications 1 à 9, **caractérisé en ce que** le collet (15, 16) de l'écrou à chapeau (6) présente une deuxième zone de collet (16) s'étendant sous forme conique, qui est configurée pour déformer la douille extérieure (19) de la bague de serrage (4).

11. Arrangement de raccordement (1) pour tuyau métallique ondulé selon au moins une des revendications 1 à 10, **caractérisé en ce qu'**aussi bien la deuxième zone de collet (16) s'étendant sous forme conique de l'écrou à chapeau (6) qu'une zone conique (24) de la douille extérieure (19) de la bague de serrage (4) sont disposées en formant un angle identique (β) avec l'axe du tube (X).

12. Arrangement de raccordement (1) pour tuyau métallique ondulé selon au moins une des revendications 1 à 11, **caractérisé en ce que** la douille extérieure (19) de la bague de serrage (4) est réalisée de façon plus aisément déformable sous l'action d'une force que l'écrou à chapeau (6).

13. Arrangement de raccordement (1) pour tuyau métallique ondulé selon au moins une des revendications 1 à 12, **caractérisé en ce que** la longueur libre (Lᵢ) de la douille intérieure (17) vaut au moins deux longueurs d'onde du tuyau ondulé (2).

14. Arrangement de raccordement (1) pour tuyau métallique ondulé selon au moins une des revendications 1 à 13, **caractérisé en ce que** la pièce de raccordement (3) est réalisée en forme de pièce de raccord fileté (3) avec une région à six pans (8) et deux portées filetées extérieures (9, 10).

15. Arrangement de raccordement (1) pour tuyau métallique ondulé selon au moins une des revendications 1 à 14, **caractérisé en ce que** le tube ondulé (2) est réalisé avec des ondulations annulaires parallèles.
